# EUROPÄISCHE PATENTSCHRIFT

(11) **EP 1 131 235 B1**
(45) Veröffentlichungstag und Bekanntmachung des Hinweises auf die Patenterteilung: **28.07.2010**
(21) Anmeldenummer: 00965846.9
(22) Anmeldetag: 13.09.2000
(51) Int. Cl.: B60T 8/1755

(54) **VERFAHREN UND VORRICHTUNG ZUR STABILISIERUNG EINES MIT EINER SCHLUPFGEREGELTEN BREMSANLAGE AUSGESTATTETEN FAHRZEUGS**
METHOD AND DEVICE FOR STABILISING A VEHICLE EQUIPPED WITH A SLIP-CONTROLLED BRAKE SYSTEM
PROCEDE ET DISPOSITIF DE STABILISATION D'UN VEHICULE EQUIPE D'UN SYSTEME DE FREINAGE A CONTROLE DE GLISSEMENT

(30) Priorität: 16.09.1999 DE 19944329
(43) Veröffentlichungstag der Anmeldung: 12.09.2001
(73) Patentinhaber: ROBERT BOSCH GMBH, 70442 Stuttgart (DE)
(72) Erfinder: KOCH, Matthäus, 75428 Illingen (DE); ULLMANN, Steffen, 70186 Stuttgart (DE); POGGENBURG, Ruediger, 71665 Vaihingen/Enz (DE); LAH, Oliver, 71287 Weissach (DE); DIEHLE, Stefan, 70825 Korntal-Muenchingen (DE)
(86) Internationale Anmeldenummer: PCT/DE2000/003182
(87) Internationale Veröffentlichungsnummer: WO 2001/019652

(56) Entgegenhaltungen:
- DE-A- 19 628 980
- DE-A- 19 643 179

## Beschreibung

### Stand der Technik

Die Erfindung betrifft ein Verfahren und eine Vorrichtung zur Stabilisierung eines mit einer schlupfgeregelten Bremsanlage ausgestatteten Fahrzeugs. Solche Verfahren und Vorrichtungen sind aus dem Stand der Technik in vielerlei Modifikationen bekannt.

In der Automobiltechnischen Zeitschrift (ATZ) 96, 1994, Heft 11, auf den Seiten 674 bis 689 erschienenen Veröffentlichung "FDR - Die Fahrdynamikregelung von Bosch" wird eine Stabilisierungsvorrichtung für Personenkraftwagen beschrieben. Bei dieser Stabilisierungsvorrichtung werden bei der Regelung der Schwimmwinkel und die Gierrate des Fahrzeugs geregelt. Hierzu wird jeweils eine Regelabweichung zwischen den Istwerten und den Sollwerten für den Schwimmwinkel und die Gierrate ermittelt. Ausgehend von diesen Sollwerten werden Sollschlupfänderungen ermittelt, die durch entsprechende Motoreingriffe und/oder Bremseneingriffe realisiert werden. Mit Hilfe der Bremseneingriffe ist es gemäß der Sollschlupfänderungen möglich, den Bremsdruck an einzelnen Rädern zu erhöhen bzw. abzusenken.

Aus der Veröffentlichung "Antiblockiersystem (ABS) für Personenkraftwagen", erschienen in "Bosch Technische Berichte" Band 7 (1980, Heft 2, ISSN 0006-789 X), ist ein System zur Bremsschlupfregelung beschrieben. Bei diesem System wird während eines Bremsvorganges der Istschlupf mit einem Sollschlupf verglichen, und sobald der Istschlupf gleich dem Sollschlupf ist, wird am betreffenden Rad Bremsdruck abgebaut.

Die DE-OS 2 112 669 beschreibt eine Blockierschutzvorrichtung, die den Radschlupf so steuert, daß maximale Bremskräfte zwischen Fahrbahn und Reifen möglich sind. Die Blockierschutzvorrichtung weist eine Regeleinrichtung auf, mit der bei einer Abweichung der Kraftfahrzeug-Längsachse von der Fahrtrichtung eine Beeinflussung des Blockierschutzes möglich ist. Die Regeleinrichtung umfaßt ein Stellglied, welches den Radschlupf selbsttätig auf einen Wert vermindert, bei dem bei kaum merklicher Bremsdruckminderung die Seitenführung des Rades wesentlich verbessert ist. Das Stellglied reagiert auf die Richtung der durchfahrenen Kurve. Unter anderem wird mit der Blockierschutzvorrichtung erreicht, daß die Bremskraft auf der Kurveninnenseite vermindert und die Bremskraft auf der Kurvenaußenseite verstärkt wird.

Sämtliche vorstehend beschriebenen zum Stand der Technik gehörenden Vorrichtungen bedienen sich des Radschlupfes als Regelgröße, um Beeinflussungen am Rad durchzuführen. Gemäß der DE-OS 196 28 980 wird am kurveninneren Vorderrad Druck abgebaut, wenn bei erkannter Teilbremsung und Kurvenfahrt die aus den Seiten-Radgeschwindigkeitssummen gebildete Schlupfdifferenz einen Schwellwert überschreitet. Vor diesem Hintergrund besteht die Aufgabe der vorliegenden Erfindung darin, ein Verfahren bzw. eine Vorrichtung bereitzustellen, welches bzw. welche eine zum Radschlupf alternative Regelgröße verwendet, ausgehend von der Beeinflussungen der Räder durchgeführt werden. Diese Aufgabe wird durch die Merkmale der Ansprüche 1 bzw. 11 gelöst.

Ein Verfahren bzw. eine Vorrichtung gemäß dem Oberbegriff von Anspruch 1 bzw. 11 ist aus der DE-OS 196 43 179 bekannt.

### Vorteile der Erfindung

Bei dem erfindungsgemäßen Verfahren handelt es sich um ein Verfahren zur Stabilisierung eines mit einer schlupfgeregelten Bremsanlage ausgestatteten Fahrzeugs. Bei diesem Verfahren werden Radgeschwindigkeiten für die einzelnen Räder des Fahrzeugs ermittelt. Als Alternative zu dem aus dem Stand der Technik als Regelgröße bekannten Schlupf wird gemäß dem erfindungsgemäßen Verfahren die Radgeschwindigkeit verwendet. Aus diesem Grund wird für wenigstens ein Rad ein Sollwert für die Radgeschwindigkeit ermittelt. Für das wenigstens eine Rad wird eine Abweichungsgröße ermittelt, die die Abweichung zwischen der für dieses Rad ermittelten Radgeschwindigkeit und dem Sollwert beschreibt. Zur Stabilisierung des Fahrzeugs werden die dem wenigstens einen Rad zugeordneten Aktuatoren in Abhängigkeit der Abweichungsgröße angesteuert.

Die Verwendung der Radgeschwindigkeit als Regelgröße hat folgende Vorteile: Der Schlupf stellt eine relative Größe dar. D.h. wird der Schlupf durch Ansteuerung der dem Rad zugeordneten Aktuatoren geregelt, so ist die Radgeschwindigkeit, die sich nach der Ansteuerung der Aktuatoren ergibt, im voraus nicht bekannt. Dagegen stellt die Radgeschwindigkeit eine absolute Größe dar. Wird die Radgeschwindigkeit durch Ansteuerung der dem Rad zugeordneten Aktuatoren geregelt, so kann die Radgeschwindigkeit, die sich nach der Ansteuerung der Aktuatoren ergibt, auf einen gewünschten Wert eingestellt werden. Dies hat beispielsweise den Vorteil, daß bei einer Kurvenfahrt sichergestellt ist, daß die sich nach der Ansteuerung der Aktuatoren ergebende Radgeschwindigkeit an die durchfahrene Kurve angepaßt ist.

Das erfindungsgemäße Verfahren bzw. die erfindungsgemäße Vorrichtung soll bei Fahrzeugen zum Einsatz kommen, die mit einem Blockierschutzregler ausgestattet sind. Dies soll allerdings keine Einschränkung darstellen. Ebenso ist ein Einsatz in Fahrzeugen denkbar, die mit einem Antriebsschlupfregler oder einer Schlupfregelung ausgestattet sind, wie sie beispielsweise in dem eingangs erwähnten ATZ-Artikel beschrieben ist.

Fahrzeuge können selbst im Teilbremsbereich während einer Kurvenfahrt zum Übersteuern neigen. Ist ein Fahrzeug mit einem Bremsschlupfregler ausgestattet, so kann es mit Hilfe des erfindungsgemäßen Verfahrens stabilisiert werden. Zur Stabilisierung des Fahrzeugs werden druckmodulierende Eingriffe, die noch keine Bremsschlupfregelungseingriffe darstellen, an der Vorderachse durchgeführt.

Darüber hinaus können Fahrzeuge, die mit einem Bremsschlupfregler ausgestattet sind, aufgrund der Entlastung des kurveninneren Vorderrades mit diesem Rad sehr schnell in eine Bremsschlupfregelung kommen. Dies ist am Pedal selbst und durch Geräusche deutlich wahrnehmbar, was eine Beeinträchtigung des Fahrkomforts darstellt. Mit dem erfindungsgemäßen Verfahren wird zudem verhindert, daß das kurveninnere Vorderrad aufgrund der Gewichtsentlastung bei höheren Querbeschleunigungen schon bei leichtem Bremsen in Bremsschlupfregelung kommt. Mit dem erfindungsgemäßen Verfahren werden somit sowohl Stabilitätsverbesserungen als auch Komfortverbesserungen bei Bremsschlupfreglern erzielt.

Zusammenfassend kann festgehalten werden: Bei der in der erfindungsgemäßen Vorrichtung zum Einsatz kommenden schlupfgeregelten Bremsanlage handelt es sich um solch eine, bei der zumindest der Bremsschlupf einzelner Fahrzeugräder regelbar ist. Das Fahrzeug befindet sich während der Stabilisierung im Teilbremsbereich.

Erfindungsgemäß handelt es sich bei dem wenigstens einen Rad, dessen Aktuatoren in Abhängigkeit der Abweichungsgröße angesteuert werden, um ein kurveninneres Rad. Von besonderem Vorteil ist es, wenn es sich dabei um das kurveninnere Vorderrad handelt. Die Aktuatoren werden so angesteuert, daß die an dem kurveninneren Rad vorliegende Bremswirkung im Vergleich zu der an dem kurvenäußeren Rad der gleichen Achse vorherrschenden Bremswirkung reduziert wird. Mit der vorstehend beschriebenen Beeinflussung des kurveninneren Vorderrades wird folgendes erreicht: Da das erfindungsgemäße Verfahren in erster Linie für ein Fahrzeug konzipiert ist, welches mit einer bremsschlupfgeregelten Bremsanlage ausgestattet ist, kommt als stabilisierender Eingriff an den den Rädern zugeordneten Aktuatoren, der zudem fahrerunabhängig durchzuführen ist, lediglich solch ein Eingriff in Frage, mit dem die Bremswirkung reduziert wird. Eine Erhöhung der Bremswirkung scheidet aus, da entsprechende Bremsanlagen, die hydraulisch oder pneumatisch arbeiten, über keine Mittel verfügen, mit denen unabhängig vom Fahrer Druck aufgebaut und letzten Endes eine Erhöhung der Bremswirkung realisiert werden kann. Da mit dem erfindungsgemäßen Verfahren der Übersteuertendenz des Fahrzeugs entgegengewirkt werden soll, muß ein untersteuernd wirkendes Giermoment erzeugt werden. Da fahrerunabhängig lediglich, wie vorstehend ausgeführt, eine Reduzierung der Bremswirkung durchführbar ist, muß diese, um ein untersteuernd wirkendes Giermoment zu erhalten, an den kurveninneren Rädern durchgeführt werden. Das kurveninnere Vorderrad wird deshalb gewählt, da an diesem kurveninneren Rad die Kraftübertragung aufgrund der Lastverteilung günstiger als am kurveninneren Hinterrad ist.

Erfindungsgemäß wird der Sollwert für die Radgeschwindigkeit in Abhängigkeit der Radgeschwindigkeit des kurvenäußeren Rades ermittelt, welches sich an derselben Achse wie das kurveninnere Rad befindet. Diese Art der Ermittlung wird deshalb durchgeführt, da bei einer Kurvenfahrt das kurvenäußere Rad aufgrund der Lastverteilung des Fahrzeugs besonders stabil ist. Ebenso ist es vorteilhaft, wenn bei der Ermittlung des Sollwertes der sich aufgrund einer Kurvenfahrt ergebende Unterschied in den Radgeschwindigkeiten der kurveninneren und der kurvenäußeren Räder berücksichtigt wird. Dies erfolgt vorteilhafter Weise dadurch, daß der Sollwert in Abhängigkeit einer Größe ermittelt wird, die den Radius der durchfahrenen Kurve beschreibt.

Für die Ermittlung des Sollwertes hat sich eine zweistufige Vorgehensweise als besonders vorteilhaft herausgestellt. Zunächst wird in Abhängigkeit der Radgeschwindigkeit des kurvenäußeren Rades, welches sich an derselben Achse wie das kurveninnere Rad befindet und/oder in Abhängigkeit einer Größe, die den Radius der durchfahrenen Kurve beschreibt, eine Zwischengröße ermittelt. Diese Zwischengröße beschreibt die aufgrund der Kurvenfahrt zu erwartende Radgeschwindigkeit des kurveninneren Rades. Der Radius der durchfahrenen Kurve wird in Abhängigkeit der Fahrzeuggeschwindigkeit und der auf das Fahrzeug wirkenden Querbeschleunigung ermittelt. Mit anderen Worten: Die so ermittelte Zwischengröße stellt die Geschwindigkeit des kurveninneren Rades dar, die dieses Rad bei einem bestimmten Kurvenradius und einer bestimmten Querbeschleunigung theoretisch haben muß, wenn die Kurvenfahrteinflüsse berücksichtigt werden. Auch wenn das kurvenäußere Rad gegenüber der Fahrzeuggeschwindigkeit einen Schlupf aufweist, kann diese Ermittlung der Zwischengröße angewendet werden. In diesem Fall ist sichergestellt, daß das kurveninnere und das kurvenäußere Rad gleich stark im Schlupf sind. D.h. zwischen den beiden Rädern liegt kein Schlupfunterschied vor. In einem zweiten Schritt wird zur Ermittlung des Sollwertes die Zwischengröße mit einem vorgebbaren Faktor bewertet. Dabei soll die Bewertung vorteilhafter Weise dergestalt sein, daß durch die Bewertung der Sollwert gegenüber der Zwischengröße um einen vorgebbaren Anteil reduziert wird. Dadurch erreicht man, daß die am kurveninneren Rad eingestellte Radgeschwindigkeit auf jeden Fall den durch die Kurvenfahrt vorgegebenen Bedingungen entspricht. Je kleiner der vorgebbare Anteil ist, um den die Zwischengröße reduziert wird, desto mehr Bremskraft wird durch das kurveninnere Vorderrad übertragen.

Vorteilhafterweise wird als Abweichungsgröße die auf den Sollwert bezogene Differenz zwischen der für das wenigstens eine Rad ermittelten Radgeschwindigkeit und dem Sollwert ermittelt. Diese Abweichungsgröße hat aufgrund ihrer Bestimmung den Charakter eines Schlupfes. Die Abweichungsgröße wird vorteilhafter Weise gefiltert. Dies erfolgt unter Verwendung eines aus dem Stand der Technik bekannten PT1-Gliedes. Die Aktuatoren werden in Abhängigkeit der gefilterten Abweichungsgröße angesteuert. Die Filterung der Abweichungsgröße stellt sicher, daß sich das Rauschen der Geschwindigkeitssignale nicht störend auswirkt. Außerdem werden kurzzeitige Fahrbahnstörungen gedämpft.

Die Abweichungsgröße wird mit einem oberen und einem unteren Schwellenwert verglichen. Dabei werden die Aktuatoren in Abhängigkeit dieses Vergleichs so angesteuert, daß die Abweichungsgröße innerhalb des Wertebereiches, der durch den oberen und den unteren Schwellenwert definiert wird, verbleibt und/oder in diesen geführt wird.

Die Aktuatoren werden vorteilhafter Weise so angesteuert, daß die an dem wenigstens einen Rad vorliegende Bremswirkung erniedrigt wird, wenn die Abweichungsgröße kleiner als der untere Schwellenwert ist und/oder beibehalten wird, wenn die Abweichungsgröße größer als der untere und kleiner als der obere Schwellenwert ist, und/oder erhöht wird, wenn die Abweichungsgröße größer als der obere Schwellenwert ist. Dadurch wird die Abweichungsgröße in dem vorstehend beschriebenen Wertebereich gehalten.

Vorteilhafterweise wird bei der Ansteuerung der Aktuatoren überprüft, ob eine Bedingung erfüllt ist, gemäß der eine Erhöhung der Bremswirkung an dem wenigstens einen Rad zu unterbinden ist, und daß für den Fall, bei dem diese Bedingung erfüllt ist, anstelle die Bremswirkung zu erhöhen, diese beibehalten wird. Dieser Vorgehensweise liegt folgender Sachverhalt zugrunde: Werden erfindungsgemäß zur Stabilisierung des Fahrzeugs die dem kurveninneren Vorderrad zugeordneten Aktuatoren angesteuert, so kommt es bei langsamer werdendem Fahrzeug und gleichbleibendem Kurvenradius aufgrund der abnehmenden Querbeschleunigung zu einer Wiederbelastung des kurveninneren Rades. Dies führt zu einer Schlupfabnahme an diesem Rad. Dadurch kann es zu einer Ansteuerung der Aktuatoren dergestalt kommen, daß eine Bremswirkung erzeugt wird. Liegt beispielsweise eine hydraulische Bremsanlage zugrunde, so kommt es zu einem Druckaufbau an diesem Rad. Diese Druckaufbauten sind bei niedriger Geschwindigkeit und geringer Verzögerung nicht unbedingt erforderlich, beeinträchtigen jedoch den Pedalkomfort durch die Aufbaupulsreihe, solange das Vordruckniveau noch nicht erreicht ist. Um diese Beeinträchtigung des Pedalkomforts zu unterbinden, wird bei solch einer erkannten Situation ein Druckaufbau unterbunden, statt dessen wird der Druck und somit die Bremswirkung beibehalten.

Als besonders vorteilhaft hat sich folgende Vorgehensweise herausgestellt: Die Ermittlung des Sollwertes und/oder der Abweichungsgröße wird durchgeführt, wenn eine entsprechende Zulassungsbedingung erfüllt ist, und/oder die Ansteuerung der Aktuatoren des wenigstens einen Rades wird freigegeben, wenn eine entsprechende Freigabebedingung erfüllt ist, und/oder die Ansteuerung der Aktuatoren des wenigstens einen Rades wird beendet, wenn eine entsprechende Beendigungsbedingung erfüllt ist.

Weitere Vorteile sowie vorteilhafte Ausgestaltungen können den Unteransprüchen, wobei auch eine beliebige Kombination der Unteransprüche denkbar ist, der Zeichnung sowie der Beschreibung des Ausführungsbeispiels entnommen werden.

### Zeichnung

Die Zeichnung besteht aus den Figuren 1 bis 4. In Figur 1 sind zwei sich im Teilbremsbereich befindliche Fahrzeuge während einer Kurvenfahrt dargestellt. Ein Fahrzeug ist ohne (a) und ein Fahrzeug mit (b) dem erfindungsgemäßen Verfahren bzw. der erfindungsgemäßen Vorrichtung ausgestattet. Figur 2 zeigt in Form eines Blockschaltbildes den Aufbau der erfindungsgemäßen Vorrichtung. Figur 3, die aus den Teilfiguren 3a und 3b besteht, zeigt mit Hilfe eines Flußdiagramms den Ablauf des in der erfindungsgemäßen Vorrichtung ablaufenden erfindungsgemäßen Verfahrens. In Figur 4 ist der zeitliche Verlauf der gefilterten Abweichungsgröße im Zusammenhang mit der Ansteuerung der dem kurveninneren Vorderrad zugeordneten Aktuatoren dargestellt.

### Ausführungsbeispiel

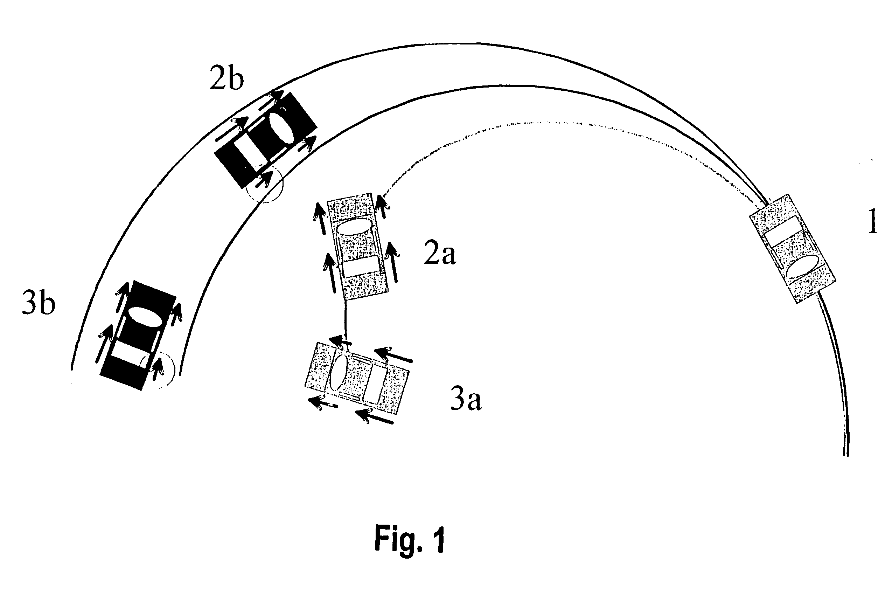

In Figur 1 sind zwei sich im Teilbremsbereich befindliche Fahrzeuge (a) bzw. (b) zu unterschiedlichen Zeitpunkten 1, 2a bzw. 3a sowie 2b bzw. 3b während einer Kurvenfahrt dargestellt. Durch das rechteckige Fenster ist die Vorderseite und durch das ovale Fenster die Rückseite des Fahrzeugs definiert. Das Fahrzeug (a) soll nicht mit der erfindungsgemäßen Vorrichtung ausgestattet sein. Dagegen soll das Fahrzeug (b) die erfindungsgemäße Vorrichtung enthalten. Die für die beiden Fahrzeuge jeweils in Längsrichtung eingezeichneten Pfeile stellen die an dem jeweiligen Rad eingestellte Bremskraft dar. Aus der Darstellung entnimmt man, daß sowohl das Fahrzeug (a) als auch das Fahrzeug (b) mit solch einer schlupfgeregelten Bremsanlage ausgestattet ist, die für die Hinterräder eine Individualregelung zuläßt. Dies ist durch die unterschiedlich langen Pfeile im Heckbereich des Fahrzeuges angedeutet. Der Darstellung in den Zeitschritten 2a bzw. 3a entnimmt man, daß für das Fahrzeug (a) beide Vorderräder gleich stark gebremst werden, d.h. daß beide Vorderräder die gleiche Bremskraft erfahren. Dies führt dazu, daß das Fahrzeug, wie angedeutet, übersteuert. D.h. der vom Fahrzeug (a) zurückgelegte Weg weist einen engeren Kurvenradius auf, als vom Fahrer aufgrund seiner Lenkwinkelvorgabe ursprünglich gewünscht war. Wie in Figur 1 in den Zeitschritten 2b und 3b dargestellt ist, werden die beiden Vorderräder des Fahrzeugs (b) unterschiedlich stark gebremst. Dabei ist die Bremswirkung des kurveninneren Vorderrades kleiner als die Bremswirkung des kurvenäußeren Vorderrades. Dies führt dazu, daß ein der Übersteuerungstendenz des Fahrzeugs entgegenwirkendes Giermoment auf das Fahrzeug ausgeübt wird. Das Fahrzeug folgt der Fahrervorgabe, die mittels des Lenkwinkels eingestellt ist.

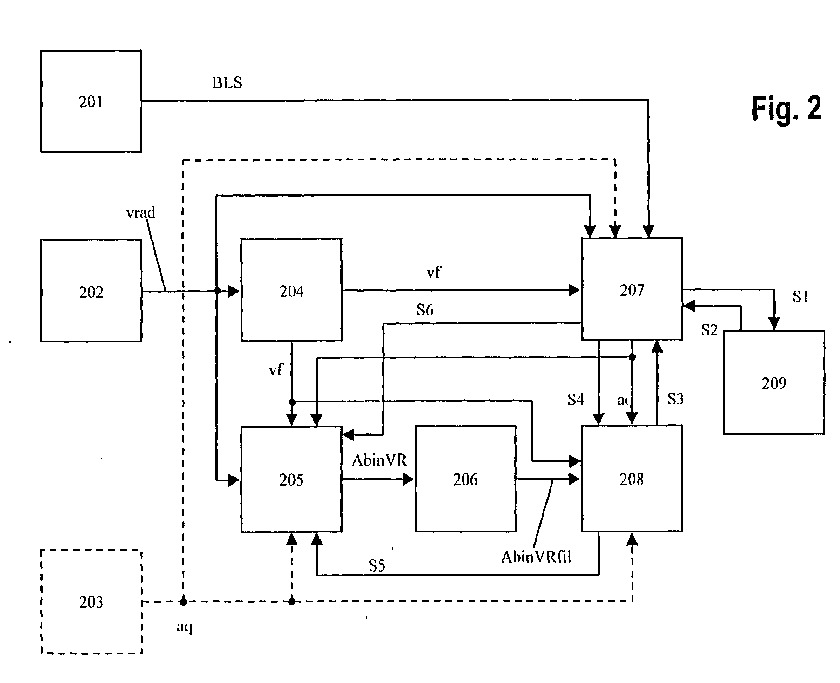

In Figur 2 ist die erfindungsgemäße Vorrichtung dargestellt. Block 201 stellt einen Bremslichtschalter dar, mit dem eine Betätigung des Bremspedals durch den Fahrer erfaßt wird. Der Bremslichtschalter 201 erzeugt ein die Bremspedalbetätigung repräsentierendes Signal BLS, welches einem Block 207 zugeführt wird. Block 202 stellt Mittel dar, mit denen für die einzelnen Räder des Fahrzeugs Radgeschwindigkeiten vrad ermittelt werden. Die Radgeschwindigkeiten vrad werden Blöcken 204 bzw. 205 sowie dem Block 207 zugeführt. Bei den Mitteln 202 handelt es sich beispielsweise um Raddrehzahlsensoren, die eine entsprechende Auswerteeinheit besitzen, mit der die ermittelten Raddrehzahlen in Radgeschwindigkeiten umgerechnet werden.

Im Block 204 wird in Abhängigkeit der ihm zugeführten Radgeschwindigkeiten vrad eine die Fahrzeuggeschwindigkeit beschreibende Größe vf ermittelt. Dies kann beispielsweise durch Mittelwertbildung erfolgen. Dabei können einzelne Räder, je nachdem wie gut sie für die Ermittlung der Fahrzeuggeschwindigkeit geeignet sind, unterschiedlich stark gewichtet werden. Die die Fahrzeuggeschwindigkeit beschreibende Größe vf wird ausgehend vom Block 204 dem Block 207 sowie dem Block 205 als auch einem Block 208 zugeführt.

Der bereits erwähnte Block 207 stellt den Reglerkern der erfindungsgemäßen Vorrichtung dar. Dieser Reglerkern 207 soll sämtliche Funktionen enthalten, die ein Reglerkern aufweist, der in einem Steuergerät zur Bremsschlupfregelung enthalten ist. Neben diesen Funktionen soll der Reglerkern 207 die im Zusammenhang mit dem erfindungsgemäßen Verfahren relevanten Funktionen aufweisen. Eine dieser Funktionen ist die, eine Größe aq bereitzustellen, die die auf das Fahrzeug wirkende Querbeschleunigung beschreibt. Die Größe aq wird im Reglerkern 207 in Abhängigkeit der Radgeschwindigkeiten vrad ermittelt. Handelt es sich beispielsweise um ein frontgetriebenes Fahrzeug, so wird die Größe aq in Abhängigkeit der Hinterräder, d.h. der nicht angetriebenen Räder, ermittelt. Hierzu kann beispielsweise die Differenz der Radgeschwindigkeiten der linken und der rechten Räder ausgewertet werden. Die Größe aq wird den Blöcken 205 bzw. 208 zugeführt.

Figur 2 weist einen Block 203 auf, bei dem es sich um einen Querbeschleunigungssensor handelt. Durch die strichlinierte Darstellung ist angegeben, daß es sich hierbei um eine Option bzw. Alternative handelt. Mit anderen Worten: Zur Durchführung des erfindungsgemäßen Verfahrens ist das Vorhandensein des Querbeschleunigungssensors 203 nicht erforderlich. Jedoch sind Bremsschlupfregelungen bekannt, die über einen entsprechenden Sensor verfügen. In diesem Fall kann die mit Hilfe des Querbeschleunigungssensors 203 erfaßte Querbeschleunigung anstelle der aus den Radgeschwindigkeiten ermittelten Querbeschleunigung verwendet werden. Dies ist durch die strichlinierte Zuführung der Querbeschleunigung aq ausgehend vom Block 203 zu den Blöcken 207, 205 sowie 208 angedeutet.

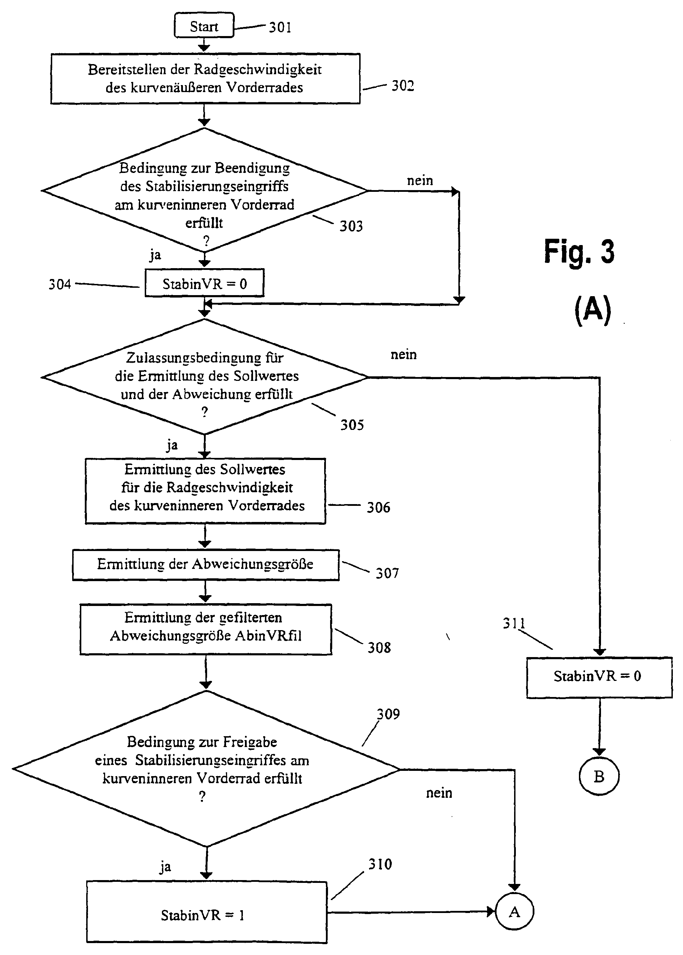

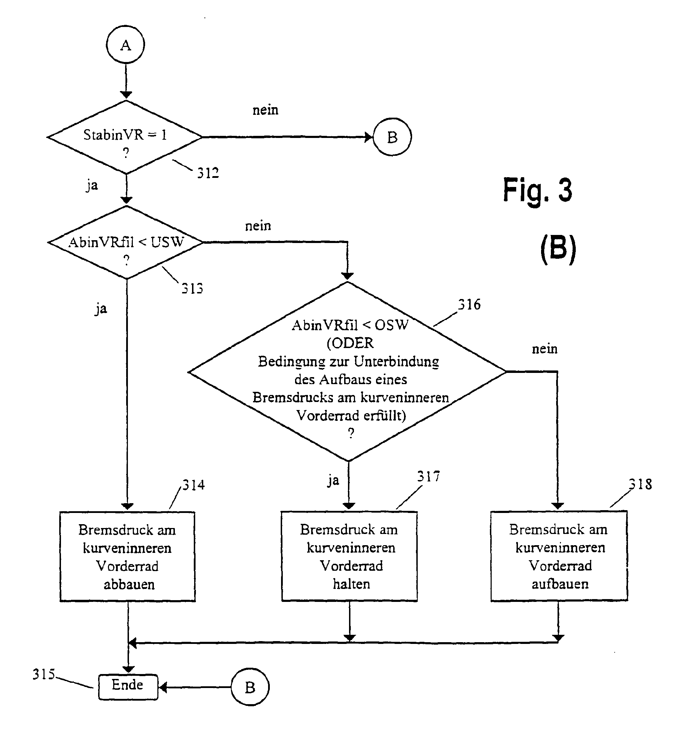

Im Block 205 wird ein Sollwert vsollinVR für die Radgeschwindigkeit des kurveninneren Vorderrades ermittelt. Da dieser Sollwert erfindungsgemäß in Abhängigkeit der Radgeschwindigkeit des kurvenäußeren Vorderrades ermittelt wird, muß dem Block 205 eine Information darüber zugeführt werden, welches Rad des Fahrzeugs das kurvenäußere Vorderrad darstellt. In Abhängigkeit des Sollwertes vsollinVR wird dann eine Abweichungsgröße AbinVR ermittelt, die die Abweichung zwischen der für das kurveninnere Vorderrad ermittelten Radgeschwindigkeit und dem Sollwert vsollinVR beschreibt. Die Ermittlung des Sollwertes und/oder der Abweichungsgröße wird dann durchgeführt, wenn eine entsprechende Zulassungsbedingung erfüllt ist. Folglich muß dem Block 205 eine entsprechende Information zugeführt werden. Diese Information wird dem Block 205 über die Signale bzw. Größen S5 ausgehend vom Block 208 zugeführt. Die Information bezüglich des kurvenäußeren Vorderrades wird dem Block 205 ausgehend vom Block 207 über die Signale bzw. Größen S6 zugeführt. Auf die Bereitstellung der Signale S5 sowie S6 wird weiter unten ausführlicher eingegangen. Die Ermittlung des Sollwertes vsollinVR und der Abweichungsgröße AbinVR wird im Zusammenhang mit Figur 3 beschrieben. Die Abweichungsgröße AbinVR wird ausgehend vom Block 205 einem Block 206 zugeführt.

Der Block 206 stellt ein Filtermittel dar, mit dem die gefilterte Abweichungsgröße AbinVRfil in Abhängigkeit der Abweichungsgröße AbinVR ermittelt wird. Durch diese Filterung werden die Einflüsse des Rauschens, welches in den Radgeschwindigkeiten enthalten ist sowie kurzzeitig auftretende Fahrbahnstörungen eliminiert bzw. gedämpft. Bei dem Filtermittel 206 handelt es sich beispielsweise um ein aus dem Stand der Technik bekanntes PT1-Glied. Die gefilterte Abweichungsgröße AbinVRfil wird ausgehend vom Block 206 dem Block 208 zugeführt.

Im Block 208 wird die gefilterte Abweichungsgröße AbinVRfil mit einem oberen und einem unteren Schwellenwert verglichen. In Abhängigkeit dieser Vergleiche werden die Aktuatoren des kurveninneren Vorderrades so angesteuert, daß die gefilterte Abweichungsgröße innerhalb des Wertebereiches, der durch den oberen und den unteren Schwellenwert definiert wird, verbleibt und/oder in diesen geführt wird. An dieser Stelle sei erwähnt, daß es auch denkbar ist, auf die Filterung der Abweichungsgröße zu verzichten. In diesem Fall wird im Block 208 nicht die gefilterte Abweichungsgröße sondern die Abweichungsgröße selbst verarbeitet. In Abhängigkeit der Vergleiche werden Signale bzw. Größen S3 erzeugt, die dem Reglerkern 207 zugeführt werden und die eine Information darüber enthalten, wie die Aktuatoren des kurveninneren Vorderrades anzusteuern sind. Auf diesen Sachverhalt wird im Zusammenhang mit Figur 3 ausführlicher eingegangen. Da die Ansteuerung der Aktuatoren des kurveninneren Vorderrades freigegeben wird, wenn eine entsprechende Freigabebedingung erfüllt ist und/oder da die Ansteuerung der Aktuatoren des kurveninneren Vorderrades beendet wird, wenn eine entsprechende Beendigungsbedingung erfüllt ist, müssen dem Block 208 ausgehend vom Block 207 entsprechende Informationen zugeführt werden. Dies erfolgt durch die Signale bzw. Größen S4. Auf die einzelnen Informationen, die in den Signalen bzw. Größen S4 enthalten sind, wird im Zusammenhang mit Figur 3 noch ausführlich eingegangen.

Der Reglerkern 207 erzeugt Signale bzw. Größen S1, durch die die zu der Bremsanlage gehörenden Aktuatoren 209 angesteuert werden. Zum einen werden die Aktuatoren 209 gemäß einer konventionellen Bremsschlupfregelung angesteuert, und zum anderen entsprechend dem erfindungsgemäßen Verfahren. D.h. die Signale bzw. Größen S1 enthalten in Form einer Überlagerung die Vorgaben einer konventionellen Bremsschlupfregelung sowie die Vorgaben des erfindungsgemäßen Verfahrens. Ausgehend von den Aktuatoren 209 werden dem Reglerkern 207 Signale bzw. Größen S2 zugeführt, die dem Reglerkern 207 eine Information über den Zustand der Aktuatoren 209 gibt.

In Figur 3, die aus den Teilfiguren 3a und 3b besteht, ist das in der erfindungsgemäßen Vorrichtung ablaufende erfindungsgemäße Verfahren dargestellt.

Das erfindungsgemäße Verfahren beginnt mit einem Schritt 301, an den sich ein Schritt 302 anschließt. Im Schritt 302 wird die Radgeschwindigkeit des kurvenäußeren Vorderrades bereitgestellt. Diese Bereitstellung erfolgt im vorstehend beschriebenen Block 205. Hierzu benötigt der Block 205 eine Information darüber, welches der Fahrzeugräder das kurvenäußere Vorderrad darstellt. Diese Information ist in den Größen bzw. Signalen S6 enthalten. Bei dieser Information kann es sich beispielsweise um ein Kurvenfahrt-Flag handeln, welches dem Block 205 anzeigt, ob eine Links- bzw. Rechtskurve gefahren wird. Anschließend an den Schritt 302 wird ein Schritt 303 ausgeführt. Im Schritt 303 wird überprüft, ob eine Bedingung zur Beendigung, d.h. eine Beendigungsbedingung, des Stabilisierungseingriffes am kurveninneren Vorderrad erfüllt ist. Die Teilbedingungen, die im Rahmen der Beendigungsbedingung zu prüfen sind, werden nur für den Fall geprüft, daß eine erfindungsgemäße Ansteuerung der Aktuatoren des kurveninneren Vorderrades durchgeführt wird. In einer ersten Teilbedingung wird überprüft, ob der Fahrer vom Bremspedal geht. In einer zweiten Teilbedingung wird überprüft, ob ein Wechsel der Kurvenrichtung vorliegt. Die Überprüfung der beiden Teilbedingungen findet im Block 208 statt. Die hierfür erforderlichen Informationen sind in den Signalen bzw. Größen S4 enthalten. Für die erste Teilbedingung ist eine Information bezüglich der Betätigung des Bremspedals erforderlich. D.h. in S4 ist das Signal BLS selbst oder ein aus diesem hergeleitetes Signal enthalten. Die erste Teilbedingung wird aus folgendem Grund überprüft: Geht der Fahrer vom Bremspedal, d.h. läßt der das Bremspedal los, so verringert sich dadurch automatisch die Bremswirkung. Eine erfindungsgemäße Ansteuerung der Aktuatoren des kurveninneren Vorderrades, d.h. eine erfindungsgemäße Stabilisierung, ist nicht mehr erforderlich. Die zweite Teilbedingung wird deshalb ausgewertet, da sich bei einem Wechsel der Kurvenrichtung das kurveninnere Vorderrad ändert. D.h. die bisherigen Aktuatoren müssen nicht mehr angesteuert werden. Statt dessen müssen die Aktuatoren des anderen Vorderrades angesteuert werden. Die Beendigungsbedingung ist erfüllt, wenn während einer erfindungsgemäßen Ansteuerung der Aktuatoren des kurveninneren Vorderrades festgestellt wird, daß die erste oder die zweite Teilbedingung erfüllt ist. Ist die Beendigungsbedingung erfüllt, so wird anschließend an den Schritt 303 ein Schritt 304 ausgeführt. In diesem Schritt wird einer Größe StabinVR, die anzeigt ob eine erfindungsgemäße Ansteuerung der Aktuatoren des kurveninneren Vorderrades durchgeführt wird, der Wert 0 zugewiesen, da die erfindungsgemäße Ansteuerung der Aktuatoren des kurveninneren Vorderrades beendet wird. Anschließend an den Schritt 304 wird ein Schritt 305 ausgeführt. Wird dagegen im Schritt 303 festgestellt, daß die Beendigungsbedingung nicht erfüllt ist, so wird anschließend an den Schritt 303 sofort der Schritt 305 ausgeführt.

Im Schritt 305 wird überprüft, ob eine Zulassungsbedingung für die Ermittlung des Sollwertes vsollinVR und der Abweichungsgröße AbinVR erfüllt ist. In diesem Zusammenhang werden folgende Teilbedingungen überprüft: In einer ersten Teilbedingung wird überprüft, ob keines der Vorderräder in Bremsschlupfregelung kommt. In einer zweiten Teilbedingung wird überprüft, ob ein im Rahmen der Bremsschlupfregelung durchzuführender Reifentoleranzabgleich ordnungsgemäß durchgeführt ist. An dieser Stelle wird bzgl. der technischen Realisierung eines Reifentoleranzabgleichs auf die DE 42 30 295 A1 verwiesen. Hier sei nur soviel erwähnt, daß mit Hilfe eines Reifentoleranzabgleichs unterschiedliche Reifenradien festgestellt werden können und beispielsweise bei einer Schlupfregelung, die auf die Raddrehzahlen zurückgreift, dergestalt berücksichtigt werden, daß die unterschiedlichen Reifenradien kompensiert werden. In einer dritten Teilbedingung wird überprüft, ob eine Bremsschlupfregelung erlaubt ist, d.h. ob das für die Bremsschlupfregelung benötigte System intakt ist. Die Überprüfung der Zulassungsbedingung findet ebenfalls im Block 208 statt. Die hierfür erforderlichen Informationen sind ebenfalls in den Signalen bzw. Größen S4 enthalten. Für die erste Teilbedingung ist eine Information bezüglich des Zustandes der Vorderräder, d.h. ob sich wenigstens eines der Vorderräder in Bremsschlupfregelung befindet oder nicht, erforderlich. Die erste Teilbedingung wird aus folgendem Grund ausgeführt: Für den Fall, daß ein erfindungsgemäßer Eingriff am kurveninneren Vorderrad durchgeführt wird und dennoch ein Eingriff des Bremsschlupfreglers an diesem Rad erforderlich wird, soll der erfindungsgemäße Eingriff abgebrochen werden, damit der Bremsschlupfregler ohne Beeinflussung durch erfindungsgemäße Eingriffe die Regelung des kurveninneren Vorderrades übernehmen kann. Mit Hilfe der ersten Teilbedingung wird somit der Übergang von einem erfindungsgemäßen Eingriff zu einem Eingriff des Bremsschlupfreglers überwacht. Die Informationen für die zweite und die dritte Teilbedingung wird in Form geeigneter Flags bereitgestellt. Die zweite und die dritte Teilbedingung wird aus dem Grund überprüft, da zur Durchführung des erfindungsgemäßen Verfahrens intakte Raddrehzahlsignale erforderlich sind. Ist das zur Durchführung der Bremsschlupfregelung erforderliche System nicht intakt bzw. liegen Störungen im Reifentoleranzabgleich vor, so ist davon auszugehen, daß die Raddrehzahlsensoren defekt sind bzw. die mit den Raddrehzahlsensoren erzeugten Signale nicht brauchbar sind. Die Zulassungsbedingung ist dann erfüllt, wenn sämtliche drei Teilbedingungen erfüllt sind. Wird im Schritt 305 festgestellt, daß die Zulassungsbedingung erfüllt ist, so wird anschließend an den Schritt 305 ein Schritt 306 ausgeführt. Wird dagegen im Schritt 305 festgestellt, daß die Zulassungsbedingung nicht erfüllt ist, so wird anschließend an den Schritt 305 ein Schritt 311 ausgeführt. Im Schritt 311 wird der Größe StabinVR der Wert Null zugewiesen, da in diesem Fall aufgrund des nicht vorliegenden Sollwertes bzw. der nicht vorliegenden Abweichungsgröße eine Ansteuerung der Aktuatoren des kurveninneren Vorderrades nicht möglich ist. Anschließend an den Schritt 311 wird ein Schritt 315 ausgeführt, mit welchem das erfindungsgemäße Verfahren beendet wird. Das Ergebnis der Überprüfung der Zulassungsbedingung wird dem Block 205, in dem die Ermittlung des Sollwertes und der Abweichungsgröße stattfindet, ausgehend vom Block 208 über die Größen bzw. Signale S5 mitgeteilt.

Handelt es sich um eine Bremsschlupfregelung, die über einen Querbeschleunigungssensor verfügt (vgl. die optionale Darstellung in Figur 2), so wird im Schritt 305 eine weitere Teilbedingung überprüft. Bei dieser Teilbedingung wird überprüft, ob der Querbeschleunigungssensor ausgefallen ist und anstatt des Wertes des Querbeschleunigungssensors ein aus den Radgeschwindigkeiten, vorzugsweise den Radgeschwindigkeiten der nicht angetriebenen Räder, ermittelter Wert für die Querbeschleunigung, quasi in der Funktion einer Rückfallebene, verwendet wird. D.h. in dieser Teilbedingung wird überprüft, ob der Wert, den der Querbeschleunigungssensor liefert, in Ordnung und somit verwendbar ist. Unter Berücksichtigung dieser weiteren Teilbedingung ist die Zulassungsbedingung erfüllt, wenn die zuvor im Zusammenhang mit dem Schritt 305 genannten Teilbedingungen und diese weitere Teilbedingung erfüllt ist.

Im Schritt 306 wird der Sollwert vsollinVR für die Radgeschwindigkeit des kurveninneren Vorderrades ermittelt. Diese Ermittlung findet in dem Block 205 statt. Der Sollwert vsollinVR wird in Abhängigkeit der Radgeschwindigkeit des kurvenäußeren Rades, welches sich an der selben Achse wie das kurveninnere Rad befindet, ermittelt. Bei der Ermittlung des Sollwertes wird der sich aufgrund einer Kurvenfahrt ergebende Unterschied in den Radgeschwindigkeiten der kurveninneren und der kurvenäußeren Räder berücksichtigt. Dies erfolgt in Abhängigkeit einer Größe, die den Radius der durchfahrenen Kurve beschreibt und die in Abhängigkeit der auf das Fahrzeug wirkenden Querbeschleunigung und der Fahrzeuggeschwindigkeit ermittelt wird. Im wesentlichen läuft die Ermittlung des Sollwertes vsollinVR in zwei Schritten ab. Zunächst wird in Abhängigkeit der Radgeschwindigkeit des kurvenäußeren Rades, welches sich an der selben Achse wie das kurveninnere Rad befindet, und einer Größe, die den Radius der durchfahrenen Kurve beschreibt, eine Zwischengröße ermittelt, die die aufgrund der Kurvenfahrt zu erwartende Radgeschwindigkeit des kurveninneren Rades beschreibt. In diesem ersten Schritt wird auch eine die Fahrzeuggeometrie beschreibende Größe, bei der es sich um die Spurweite des Fahrzeuges handelt, berücksichtigt. Für gewöhnlich handelt es sich um die Spurweite der Vorderachse. Es kann aber auch die Spurweite der Hinterachse oder ein Mittelwert, der aus der Spurweite der Vorderachse und der Spurweite der Hinterachse ermittelt wird, verwendet werden. In einem zweiten Schritt wird aus der Zwischengröße der Sollwert vsollinVR dadurch ermittelt, daß die Zwischengröße mit einem vorgebbaren Faktor bewertet wird. Da der vorgebbare Faktor kleiner als 1 ist, ist der Sollwert kleiner als die Zwischengröße. Bei dem Faktor kann es sich um einen fest vorgegebenen Wert handeln, der im Vorfeld im Rahmen der Applikation ermittelt wird. Alternativ kann der Faktor auch während des Betriebs des Fahrzeuges berechnet werden. Die Berechnung kann in Abhängigkeit der Fahrzeuggeschwindigkeit, der Querbeschleunigung, der Längsbeschleunigung und einer den Fahrbahnzustand beschreibenden Größe, insbesondere dem Reibwert ermittelt werden. Auch kann eine Information bzgl. seitenweise unterschiedlicher Reibwerte eingehen. Bei der Ermittlung des Sollwertes vsollinVR ist es letzten Endes unerheblich, ob das kurvenäußere Rad einen Schlupf aufweist oder nicht.

Anschließend an den Schritt 306 wird ein Schritt 307 ausgeführt, in welchem die Abweichungsgröße AbinVR in Abhängigkeit des Sollwertes vsollinVR ermittelt wird. Diese Ermittlung findet ebenfalls im Block 205 statt. Die Abweichungsgröße beschreibt die Abweichung zwischen der für das kurveninnere Vorderrad ermittelten Radgeschwindigkeit und dem im Schritt 306 ermittelten Sollwert. Konkret wird die Abweichungsgröße als auf den Sollwert bezogene Differenz zwischen der für das kurveninnere Vorderrad ermittelten Radgeschwindigkeit und dem Sollwert ermittelt. Mit anderen Worten: Bei einer entsprechenden Bewertung mit dem Faktor 100 entspricht die Abweichungsgröße AbinVR der prozentualen Abweichung der für das kurveninnere Vorderrad gemessen Radgeschwindigkeit von dem Sollwert vsollinVR. Anschließend an den Schritt 307 wird ein Schritt 308 ausgeführt. In diesem Schritt wird die Abweichungsgröße mit Hilfe eines geeigneten Filtermittels, vorzugsweise einem PT1-Glied, gefiltert, wodurch die gefilterte Abweichungsgröße AbinVRfil entsteht. Die Filterung findet in dem Block 206 statt.

Anschließend an den Schritt 308 wird ein Schritt 309 ausgeführt, in welchem eine Freigabebedingung überprüft wird. Die Freigabebedingung besteht aus mehreren Teilbedingungen. In einer ersten Teilbedingung wird überprüft, ob keine erfindungsgemäße Ansteuerung der Aktuatoren des kurveninneren Vorderrades durchgeführt wird. Wird für die Aktuatoren des kurveninneren Vorderrades bereits eine erfindungsgemäße Ansteuerung durchgeführt, so ist davon auszugehen, daß diese Ansteuerung aufrechterhalten bleibt. In diesem Fall wäre eine Überprüfung weiterer Teilbedingungen nicht erforderlich. Wird dagegen noch keine erfindungsgemäße Ansteuerung durchgeführt, so gewinnen die nachfolgenden Teilbedingungen zwei bis fünf an Bedeutung, denn anhand dieser Teilbedingungen läßt sich ermitteln, ob eine erfindungsgemäße Ansteuerung erforderlich ist. In einer zweiten Teilbedingung wird überprüft, ob die Querbeschleunigung größer als ein entsprechender vorgegebener Wert ist. Ist der Wert der Querbeschleunigung größer als der vorgegebene Wert, so liegt ein Fahrzustand vor, bei dem eine Instabilität des Fahrzeuges eventuell möglich wird und es folglich u.U. einer erfindungsgemäßen Ansteuerung der Aktuatoren des kurveninneren Vorderrades bedarf. In einer dritten Teilbedingung wird überprüft, ob die Fahrzeuggeschwindigkeit größer als ein entsprechender vorgegebener Wert ist. Auch für die dritte Teilbedingung gilt, daß für den Fall, bei dem der vorgegebene Wert überschritten wird, ein Fahrzustand vorliegt, bei dem einer Instabilität des Fahrzeuges entgegengewirkt werden soll. In einer vierten Teilbedingung wird überprüft, ob die Fahrzeugverzögerung - vorteilhafterweise wird der Betrag der gefilterten Fahrzeugverzögerung betrachtet- größer als ein vorgegebener Wert ist. Ausgehend von der vierten Teilabfrage kann eine Freigabe erfolgen, wenn die Fahrzeugverzögerung groß ist. D.h. liegt eine kleine Verzögerung vor, dann ist kein erfindungsgemäßer Eingriff erforderlich. Liegt dagegen eine große Fahrzeugverzögerung vor, dann kann ein erfindungsgemäßer Eingriff zugelassen werden. In einer fünften Teilbedingung wird überprüft, ob die gefilterte Abweichungsgröße kleiner als ein entsprechender vorgegebener Wert ist.

Die im Rahmen der vorstehend aufgeführten fünf Teilbedingungen erforderlichen Informationen, werden dem Block 208, in dem die Freigabebedingung überprüft wird, mit Hilfe der Signale S4 zugeführt. Die Freigabebedingung ist erfüllt, wenn alle fünf Teilbedingungen gleichzeitig erfüllt sind.

Ist die Freigabebedingung erfüllt, so wird anschließend an den Schritt 309 ein Schritt 310 ausgeführt. In diesem Schritt wird der Variablen StabinVR der Wert 1 zugewiesen, da eine erfindungsgemäße Ansteuerung der Aktuatoren des kurveninneren Vorderrades erforderlich ist. Anschließend an den Schritt 310 wird ein Schritt 312 ausgeführt, in dem überprüft wird, ob die Größe StabinVR den Wert 1 aufweist. Ist dies der Fall, was gleichbedeutend damit ist, daß eine erfindungsgemäße Ansteuerung der Aktuatoren des kurveninneren Vorderrades erforderlich ist, so wird anschließend an den Schritt 312 ein Schritt 313 ausgeführt, mit dem die erfindungsgemäße Ansteuerung der Aktuatoren des kurveninneren Vorderrades eingeleitet wird. Weist dagegen die Größe StabinVR nicht den Wert 1 auf, so wird anschließend an den Schritt 312 der Schritt 315 ausgeführt. Wird dagegen im Schritt 309 festgestellt, daß die Freigabebedingung nicht erfüllt ist, so wird anschließend an den Schritt 309 direkt der Schritt 312 ausgeführt.

Im Schritt 313 wird überprüft ob die gefilterte Abweichungsgröße AbinVRfil kleiner als ein unterer Schwellenwert USW ist. Ist dies der Fall, so wird anschließend an den Schritt 313 ein Schritt 314 ausgeführt, in welchem die Aktuatoren des kurveninneren Rades so angesteuert werden, daß die Bremswirkung an diesem Rad vermindert wird. Da es sich bei der dem Ausführungsbeispiel zugrundeliegenden Bremsanlage um eine hydraulische Bremsanlage handeln, soll wird im konkreten Fall der Bremsdruck am kurveninneren Vorderrad abgebaut. Anschließend an den Schritt 314 wird der Schritt 315 ausgeführt.

Wird dagegen im Schritt 313 festgestellt, daß die gefilterte Abweichungsgröße AbinVRfil größer als der untere Schwellenwert USW ist, so wird anschließend an den Schritt 313 ein Schritt 316 ausgeführt. In diesem Schritt wird überprüft, ob die gefilterte Abweichungsgröße AbinVRfil kleiner als ein oberer Schwellenwert OSW ist. Ist dies der Fall, so wird anschließend an den Schritt 316 ein Schritt 317 ausgeführt. In diesem Schritt werden die Aktuatoren des kurveninneren Vorderrades so angesteuert, daß für dieses Rad der Bremsdruck gehalten wird. Anschließend an den Schritt 317 wird der Schritt 315 ausgeführt. Wird dagegen im Schritt 316 festgestellt, daß die gefilterte Abweichungsgröße größer als der obere Schwellenwert OSW ist, so wird anschließend an den Schritt 316 ein Schritt 318 ausgeführt. In diesem Schritt werden die Aktuatoren des kurveninneren Vorderrades so angesteuert, daß der Bremsdruck an diesem Rad aufgebaut wird. Anschließend an den Schritt 318 wird ebenfalls der Schritt 315 ausgeführt.

Sowohl der Druckaufbau als auch der Druckabbau erfolgt in Form von Pulsreihen. Dabei können die Pulszeiten und die Pausenzeiten fest vorgegeben sein oder adaptiv ermittelt werden. Die Aufbaupulsreihe verfügt über einen sogenannten Füllpuls. Der Füllpuls stellt den ersten Aufbaupuls dar, mit dem die Bremsbacken vor Einstellung der eigentlichen Bremswirkung an die Bremstrommel oder die Bremsscheiben angelegt werden. Dadurch wird eine exakte Einstellung der Bremswirkung erreicht.

In einer abgeänderten Ausführungsform des Ausführungsbeispiels wird im Schritt 316 ergänzend zu der bereits beschriebenen Überprüfung, ob die gefilterte Abweichungsgröße kleiner als der obere Schwellenwert ist, eine weitere Bedingung überprüft. Durch Überprüfung dieser weiteren Bedingung wird festgestellt, ob eine Erhöhung der Bremswirkung an dem kurveninneren Rad zu unterbinden ist und statt dessen die Bremswirkung beibehalten werden soll. Die weitere Bedingung besteht aus mehreren Teilbedingungen. In einer ersten Teilbedingung wird überprüft, ob die Fahrzeuggeschwindigkeit kleiner als ein entsprechender Schwellenwert ist. In einer zweiten Teilbedingung wird überprüft, ob die gefilterte Fahrzeugverzögerung größer als ein entsprechender Schwellenwert ist. In einer dritten Teilbedingung wird überprüft, ob die Zeitdauer, während der der Bremsdruck gehalten wird, kleiner als ein entsprechender Schwellenwert ist. Die erste und die zweite Teilbedingung werden aus folgendem Grund überprüft: Bei erfindungsgemäßer Ansteuerung der Aktuatoren des kurveninneren Vorderrades kommt es bei langsamer werdendem Fahrzeug und gleichbleibenden Kurvenradius aufgrund der abnehmenden Querbeschleunigung zu einer Wiederbelastung des kurveninneren Rades. Dies führt zu einer Schlupfabnahme an diesem Rad. Dadurch kann es zu Druckaufbauten an diesem Rad kommen. Diese Druckaufbauten sind bei niedriger Geschwindigkeit und geringer Verzögerung nicht unbedingt erforderlich. Sie beeinträchtigen vielmehr den Pedalkomfort durch die Aufbaupulsreihe, solange das Vordruckniveau noch nicht erreicht ist. Um diese Beeinträchtigung des Pedalkomforts zu unterbinden, wird bei solch einer Situation ein Druckaufbau unterbunden, statt dessen wird der Druck beibehalten. Die dritte Teilabfrage stellt sicher, daß die Durchführung des Druckhaltens anstelle des Druckaufbaus nur für eine definierte Zeitdauer erfolgt.

Die Schritte 312, 313, 314, 316, 317 und 318 werden im Block 208 durchgeführt. Die hierfür erforderlichen Informationen werden dem Block 208 mit Hilfe der Signale bzw. Größen S4 zugeführt. Die Ergebnisse, d.h. die Information darüber, ob der Bremsdruck aufgebaut oder gehalten oder abgebaut werden soll, werden dem Reglerkern mit Hilfe der Signale bzw. Größen S3 zugeführt.

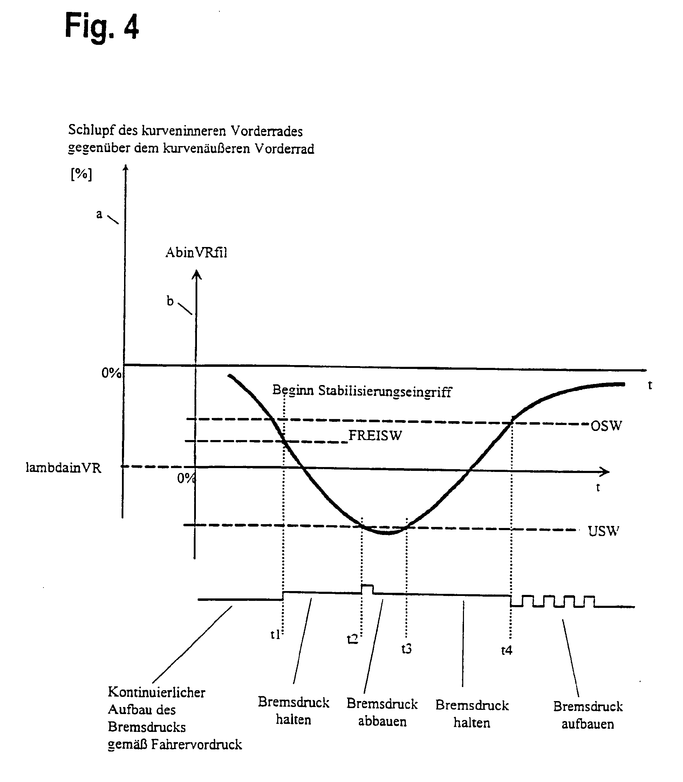

Figur 4 zeigt wie die Aktuatoren des kurveninneren Vorderrades in Abhängigkeit des Vergleichs der gefilterten Abweichungsgröße AbinVRfil mit dem oberen Schwellenwert OSW und dem unteren Schwellenwert USW anzusteuern sind. Bis zum Zeitpunkt t1 erfolgt ein kontinuierlicher Druckaufbau, der durch den vom Fahrer eingestellten Vordruck vorgegeben ist. Eine erfindungsgemäße Ansteuerung der Aktuatoren des kurveninneren Rades ist bis dato noch nicht erfolgt. Zum Zeitpunkt t1 wird anhand des Unterschreiten des Schwellenwertes FREISW durch die gefilterte Abweichungsgröße AbinVRfil festgestellt (fünfte Teilbedingung in Schritt 309), daß eine erfindungsgemäße Ansteuerung der Aktuatoren des kurveninneren Vorderrades durchzuführen ist. Da die gefilterte Abweichungsgröße AbinVRfil in dem durch die Zeitpunkte t1 und t2 definierten Zeitraum zwischen dem oberen und dem unteren Schwellenwert liegt, werden zunächst die Aktuatoren des kurveninneren Vorderrades so angesteuert, daß der Bremsdruck gehalten wird. Beginnend mit dem Zeitpunkt t2 unterschreitet die gefilterte Abweichungsgröße den unteren Schwellenwert, was bis zum Zeitpunkt t3 anhält. Aus diesem Grund werden während dieses Zeitraums die Aktuatoren des kurveninneren Vorderrades so angesteuert, daß der Bremsdruck für das kurveninnere Vorderrad abgebaut wird. Während des durch die Zeitpunkte t3 und t4 definierten Zeitraumes liegt die gefilterte Abweichungsgröße wieder zwischen dem oberen und dem unteren Schwellenwert. Die Ansteuerung der Aktuatoren des kurveninneren Vorderrades entspricht der während des durch die Zeitpunkte t1 und t2 definierten Zeitraumes. Ab dem Zeitpunkt t4 überschreitet die gefilterte Abweichungsgröße den oberen Schwellenwert. Deshalb werden die Aktuatoren des kurveninneren Vorderrades so angesteuert, daß Bremsdruck aufgebaut wird. An dieser Stelle sei folgendes bemerkt: Verfügt die Bremsanlage nicht über Mittel, mit denen ein Druck aufgebaut werden kann, der über dem vom Fahrer vorgegebenen liegt, so kann der Druck nur bis zu dem vom Fahrer vorgegebenen Wert aufgebaut werden. In Figur 4 sind zwei Koordinatensysteme a bzw. b eingezeichnet. In dem Koordinatensystem a ist der Schlupf lambdainVR des kurveninneren Vorderrades gegenüber dem kurvenäußeren Vorderrad dargestellt. Dieser Schlupf geht in die Bildung des Faktors ein, mit dem aus der Zwischengröße der Sollwert ermittelt wird. Das Koordinatensystem b zeigt den zeitlichen Verlauf der gefilterten Abweichungsgröße AbinVRfil. Wie man Figur 4 entnimmt, wird die Schlupfdifferenz zwischen dem kurveninneren und dem kurvenäußeren Vorderrad in einem definierbaren Band um einen definierbaren Sollwert gehalten.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee haben soll. In dem vorstehend beschriebenen Ausführungsbeispiel wird die Stabilisierung des Fahrzeuges lediglich durch Ansteuerung der Aktuatoren des kurveninneren Vorderrades realisiert. Selbstverständlich kann in entsprechender Weise auch eine Ansteuerung des kurveninneren Hinterrades erfolgen. Darüber hinaus ist auch eine Ansteuerung eines der kurvenäußeren Räder denkbar. In diesem Fall ist jedoch, um ein dem Übersteuern entgegenwirkendes Giermoment zu erzeugen, nicht eine Reduzierung sondern eine Erhöhung der Bremswirkung erforderlich. D.h. der letzt genannte Fall läßt sich nur bei einer Bremsanlage realisieren, die über die Möglichkeit verfügt, fahrerunabhängig die Bremswirkung zu erhöhen. Dies ist bekannterweise mit einer Bremsanlage, mit der allein der Bremsschlupf geregelt werden kann, nicht möglich. Jedoch bieten Bremsanlagen, die mit einer Antriebsschlupfregelung ausgestattet sind bzw. Bremsanlagen, wie sie in dem eingangs erwähnten ATZ-Artikel beschrieben sind, eine entsprechende Möglichkeit. Darüber hinaus ist der Einsatz des erfindungsgemäßen Verfahrens nicht nur auf hydraulische bzw. pneumatische Bremsanlagen beschränkt. Ein Einsatz in elektrohydraulischen, elektropneumatischen oder elektromechanischen Bremsanlagen ist ebenso denkbar.

## Patentansprüche

1. Verfahren zur Stabilisierung eines mit einer schlupfgeregelten Bremsanlage ausgestatteten Fahrzeugs,
bei dem Radgeschwindigkeiten (vrad) für die einzelnen Räder des Fahrzeugs ermittelt werden,
bei dem für wenigstens ein Rad ein Sollwert (vsollinVR) für die Radgeschwindigkeit ermittelt wird,
bei dem für das wenigstens eine Rad eine Abweichungsgröße (AbinVR) ermittelt wird, die die Abweichung zwischen der für dieses Rad ermittelten Radgeschwindigkeit und dem Sollwert beschreibt, und
bei dem zur Stabilisierung des Fahrzeuges die dem wenigstens einen Rad zugeordneten Aktuatoren in Abhängigkeit der Abweichungsgröße angesteuert werden,
**dadurch gekennzeichnet, dass**
- es sich bei dem wenigstens einen Rad um ein kurveninneres Rad, insbesondere das kurveninnere Vorderrad, handelt und der Sollwert für die Radgeschwindigkeit des kurveninneren Rades in Abhängigkeit der Radgechwindigkeit des kurvenäußeren Rades ermittelt wird, welches sich an der selben Achse wie das kurveninnere Rad befindet, und
- durch die Ansteuerung der Aktuatoren die an dem kurveninneren Rad vorliegende Bremswirkung im Vergleich zu der an dem kurvenäußeren Rad der gleichen Achse vorherrschenden Bremswirkung reduziert wird.

2. Verfahren nach Anspruch 1, **dadurch gekennzeichnet,**
**daß** bei der Ermittlung des Sollwertes der sich aufgrund einer Kurvenfahrt ergebende Unterschied in den Radgeschwindigkeiten der kurveninneren und der kurvenäußeren Räder berücksichtigt wird, insbesondere wird der Sollwert in Abhängigkeit einer Größe, die den Radius der durchfahrenen Kurve beschreibt, ermittelt.

3. Verfahren nach Anspruch 1, **dadurch gekennzeichnet,**
**daß** in Abhängigkeit der Radgeschwindigkeit des kurvenäußeren Rades, welches sich an der selben Achse wie das kurveninnere Rad befindet, und/oder in Abhängigkeit einer Größe, die den Radius der durchfahrenen Kurve beschreibt, zunächst eine Zwischengröße ermittelt wird, die die aufgrund der Kurvenfahrt zu erwartende Radgeschwindigkeit des kurveninneren Rades beschreibt, und daß zur Ermittlung des Sollwertes die Zwischengröße mit einem vorgebbaren Faktor bewertet wird.

4. Verfahren nach Anspruch 3, **dadurch gekennzeichnet,**
**daß** durch die Bewertung der Sollwert gegenüber der Zwischengröße um einen vorgebbaren Anteil reduziert ist.

5. Verfahren nach Anspruch 1, **dadurch gekennzeichnet,**
**daß** als Abweichungsgröße die auf den Sollwert bezogene Differenz zwischen der für das wenigstens eine Rad ermittelten Radgeschwindigkeit und dem Sollwert ermittelt wird, und/oder
**daß** die Abweichungsgröße, insbesondere unter Verwendung eines PT1-Gliedes, gefiltert wird, wobei die Aktuatoren in Abhängigkeit der gefilterten Abweichungsgröße angesteuert werden.

6. Verfahren nach Anspruch 1, **dadurch gekennzeichnet,**
**daß** die Abweichungsgröße mit einem oberen (OSW) und einem unteren (USW) Schwellenwert verglichen wird, wobei die Aktuatoren in Abhängigkeit dieses Vergleichs so angesteuert werden, daß die Abweichungsgröße innerhalb des Wertebereiches, der durch den oberen und den unteren Schwellenwert definiert wird, verbleibt und/oder in diesen geführt wird.

7. Verfahren nach Anspruch 6, **dadurch gekennzeichnet,**
**daß** die Aktuatoren so angesteuert werden, daß die an dem wenigstens einen Rad vorliegende Bremswirkung
erniedrigt wird, wenn die Abweichungsgröße kleiner als der untere Schwellenwert ist, und/oder
beibehalten wird, wenn die Abweichungsgröße größer als der untere und kleiner als der obere Schwellenwert ist, und/oder
erhöht wird, wenn die Abweichungsgröße größer als der obere Schwellenwert ist.

8. Verfahren nach Anspruch 7, **dadurch gekennzeichnet,**
**daß** zusätzlich überprüft wird, ob eine Bedingung erfüllt ist, gemäß der eine Erhöhung der Bremswirkung an dem wenigstens einen Rad zu unterbinden ist, und daß für den Fall, daß diese Bedingung erfüllt ist, anstelle die Bremswirkung zu erhöhen, die Bremswirkung beibehalten wird.

9. Verfahren nach Anspruch 1, **dadurch gekennzeichnet,**
**daß** die Ermittlung des Sollwertes und/oder der Abweichungsgröße durchgeführt wird, wenn eine entsprechende Zulassungsbedingung erfüllt ist, und/oder daß die Ansteuerung der Aktuatoren des wenigstens einen Rades freigegeben wird, wenn eine entsprechende Freigabebedingung erfüllt ist, und/oder daß die Ansteuerung der Aktuatoren des wenigstens einen Rades beendet wird, wenn eine entsprechende Beendigungsbedingung erfüllt ist.

10. Verfahren nach Anspruch 1, **dadurch gekennzeichnet,**
**daß** es sich bei der schlupfgeregelten Bremsanlage um eine Bremsanlage handelt, bei der zumindest der Bremsschlupf einzelner Fahrzeugräder geregelt wird, und/oder
**daß** sich das Fahrzeug während der Stabilisierung im Teilbremsbereich befindet.

11. Vorrichtung zur Stabilisierung eines mit einer schlupfgeregelten Bremsanlage ausgestatteten Fahrzeugs,
die Mittel (202) enthält, mit denen Radgeschwindigkeiten (vrad) für die einzelnen Räder des Fahrzeugs ermittelt werden,
die Mittel (205) enthält, mit denen für wenigstens ein Rad ein Sollwert (vsollinVR) für die Radgeschwindigkeit ermittelt wird, und mit denen für das wenigstens eine Rad eine Abweichungsgröße (AbinVR) ermittelt wird, die die Abweichung zwischen der für dieses Rad ermittelten Radgeschwindigkeit und dem Sollwert beschreibt,
wobei zur Stabilisierung des Fahrzeuges die dem wenigstens einen Rad zugeordneten Aktuatoren in Abhängigkeit der Abweichungsgröße angesteuert werden,
**dadurch gekennzeichnet, dass**
- es sich bei dem wenigstens einen Rad um ein kurveninneres Rad, insbesondere das kurveninnere Vorderrad, handelt und
- durch die Ansteuerung der Aktuatoren die an dem kurveninneren Rad vorliegende Bremswirkung im Vergleich zu der an dem kurvenäußeren Rad der gleichen Achse vorherrschenden Bremswirkung reduziert wird,
- wobei der Sollwert für die Radgeschwindigkeit in Abhängigkeit der Radgeschwindigkeit des kurvenäußeren Rades ermittelt wird, welches sich an der selben Achse wie das kurveninnere Rad befindet.

## Claims

1. Method for stabilizing a vehicle which is equipped with a slip-controlled brake system,
in which wheel speeds (vrad) for the individual wheels of the vehicle are determined,
in which a setpoint value (vsollinVR) for the wheel speed for at least one wheel is determined,
in which, for the at least one wheel, a deviation variable (AbinVR) is determined which describes the deviation between the wheel speed determined for this wheel and the setpoint value, and
in which, in order to stabilize the vehicle, the actuators which are assigned to the at least one wheel are actuated as a function of the deviation variable, **characterized in that**
- the at least one wheel is a wheel on the inside of the bend, in particular the front wheel on the inside of the bend, and the setpoint value for the wheel speed of the wheel on the inside of the bend is determined as a function of the wheel speed of the wheel on the outside of the bend, which wheel is located on the same axle as the wheel on the inside of the bend, and
- by actuating the actuators, the braking effect present at the wheel on the inside of the bend is reduced compared to the braking effect prevailing at the wheel on the outside of the bend on the same axle.

2. Method according to Claim 1, **characterized in that,** during the determination of the setpoint value, the difference, arising owing to the travel through a bend, in the wheel speeds of the wheels on the inside of the bend and of the wheels on the outside of the bend is taken into account, in particular the setpoint value is determined as a function of a variable which describes the radius of the bend which is being travelled through.

3. Method according to Claim 1, **characterized in that** an intermediate variable, which describes the wheel speed of the wheel on the inside of the bend which is to be expected owing to the travel through a bend, is firstly determined as a function of the wheel speed of the wheel on the outside of the bend, which wheel is located on the same axle as the wheel on the inside of the bend, and/or as a function of a variable which describes the radius of the bend being travelled through and **in that**, in order to determine the setpoint value, the intermediate variable is evaluated with a predefinable factor.

4. Method according to Claim 3, **characterized in that** as a result of the evaluation the setpoint value is reduced with respect to the intermediate value by a predefinable component.

5. Method according to Claim 1, **characterized in that** the difference, related to the setpoint value, between the wheel speed which is determined for the at least one wheel and the setpoint value is determined as a deviation variable, and/or
**in that** the deviation variable is filtered, in particular using a PT1 element, wherein the actuators are actuated as a function of the filtered deviation variable.

6. Method according to Claim 1, **characterized in that** the deviation variable is compared with an upper threshold value (OSW) and a lower threshold value (USW), wherein the actuators are actuated as a function of this comparison in such a way that the deviation variable remains within the value range which is defined by the upper and lower threshold values and/or is adjusted into said value range.

7. Method according to Claim 6, **characterized in that** the actuators are actuated in such a way that the braking effect which is present at the at least one wheel
is reduced if the deviation variable is smaller than the lower threshold value, and/or
is retained if the deviation variable is higher than the lower threshold value and lower than the upper threshold value, and/or
is increased if the deviation variable is higher than the upper threshold value.

8. Method according to Claim 7, **characterized in that** it is additionally checked whether a condition is met according to which an increase in the braking effect at the at least one wheel is to be prevented and **in that** in the event of this condition being met the braking effect is maintained instead of being increased.

9. Method according to Claim 1, **characterized in that** the setpoint value and/or the deviation variable are determined if a corresponding approval condition is met and/or **in that** the actuation of the actuators of the at least one wheel is enabled if a corresponding enable condition is met and/or **in that** the actuation of the actuators of the at least one wheel is terminated if a corresponding termination condition is met.

10. Method according to Claim 1, **characterized in that** the slip-controlled brake system is a brake system in which at least the brake slip of individual vehicle wheels is regulated,
and/or
the vehicle is located in the partial braking range during stabilization.

11. Device for stabilizing a vehicle which is equipped with a slip-controlled brake system,
which contains means (202) with which wheel speeds (vrad) for the individual wheels of the vehicle are determined,
which contains means (205) with which a setpoint value (vsollinVR) for the wheel speed is determined for at least one wheel and with which, for the at least one wheel, a deviation variable (AbinVR) which describes the deviation between the wheel speed determined for this wheel and the setpoint value is determined, wherein, in order to stabilize the vehicle, the actuators which are assigned to the at least one wheel are actuated as a function of the deviation variable, **characterized in that**
- the at least one wheel is a wheel on the inside of the bend, in particular the front wheel on the inside of the bend, and
- as a result of the actuation of the actuators, the braking effect which is present at the wheel on the inside of the bend is reduced compared to the braking effect prevailing at the wheel on the outside of the bend on the same axle,
- wherein the setpoint value for the wheel speed is determined as a function of the wheel speed of the wheel on the outside of the bend, which wheel is located on the same axle as the wheel on the inside of the bend.

## Revendications

1. Procédé de stabilisation d'un véhicule équipé d'une installation de freinage à régulation du patinage,
dans lequel les vitesses (vrad) des différentes roues du véhicule sont déterminées,
dans lequel une valeur de consigne (vsollinVR) de la vitesse de roue est déterminée pour au moins une roue,
dans lequel une grandeur d'écart (AbinVR) qui décrit l'écart entre la vitesse de roue déterminée pour la ou les roues et la valeur de consigne est déterminée pour cette roue et
dans lequel les actionneurs associés à la ou les roues sont commandés en fonction de la grandeur d'écart pour stabiliser le véhicule,
**caractérisé en ce que**
la ou les roues sont des roues situées à l'intérieur d'une courbe en particulier la roue avant située à l'intérieur de la courbe, et
la valeur de consigne de la vitesse de la roue située à l'intérieur de la courbe est déterminée en fonction de la vitesse de la roue située à l'extérieur de la courbe et sur le même essieu que la roue située à l'intérieur de la courbe et
par la commande des actionneurs, l'effet de freinage exercé sur la roue située à l'intérieur de la courbe est réduit par rapport à l'effet de freinage qui est appliqué sur la roue située à l'extérieur de la courbe et sur le même essieu.

2. Procédé selon la revendication 1, **caractérisé en ce que** lors de la détermination de la valeur de consigne, la différence qui découle du roulage en courbe entre les vitesses de la roue située à l'intérieur de la courbe et de la roue située à l'extérieur de la courbe est prise en compte et en particulier la valeur de consigne est déterminée en fonction d'une grandeur qui décrit le rayon de la courbe parcourue.

3. Procédé selon la revendication 1, **caractérisé en ce qu'**en fonction de la vitesse de la roue située à l'extérieur de la courbe et sur le même essieu que la roue située à l'intérieur de la courbe et/ou en fonction d'une grandeur qui décrit le rayon de la courbe parcourue, une grandeur intermédiaire qui décrit la vitesse de la roue située à l'intérieur de la courbe à laquelle on peut s'attendre du fait du déplacement en courbe est d'abord déterminée et **en ce qu'**un facteur pouvant être prédéterminé est appliqué sur la grandeur intermédiaire pour déterminer la valeur de consigne.

4. Procédé selon la revendication 3, **caractérisé en ce que** l'évaluation réduit la valeur de consigne d'une portion pouvant être prédéterminée par rapport à la grandeur intermédiaire.

5. Procédé selon la revendication 1, **caractérisé en ce que** comme grandeur d'écart, on détermine le rapport de la différence, rapportée à la valeur de consigne, entre la vitesse déterminée pour la ou les roues et la valeur de consigne et/ou **en ce que** la grandeur d'écart est filtrée en particulier en utilisant un organe PT1, les actionneurs étant commandés en fonction de la grandeur d'écart filtrée.

6. Procédé selon la revendication 1, **caractérisé en ce que** la grandeur d'écart est comparée à une valeur supérieure de seuil (OSW) et à une valeur inférieure de seuil (USW), les actionneurs étant commandés en fonction de cette comparaison de telle sorte que la grandeur d'écart reste à l'intérieur de la plage de valeurs définie par la valeur supérieure de seuil et la valeur inférieure de seuil et/ou soit maintenue dans cet intervalle.

7. Procédé selon la revendication 6, **caractérisé en ce que** les actionneurs sont commandés de telle sorte que l'effet de freinage appliqué sur la ou les roues est diminué si la grandeur d'écart est inférieure à la valeur inférieure de seuil, et/ou est maintenu si la grandeur d'écart est supérieure à la valeur inférieure de seuil et inférieure à la valeur supérieure de seuil et/ou est augmenté si la grandeur d'écart est supérieure à la valeur supérieure de seuil.

8. Procédé selon la revendication 7, **caractérisé en ce que** l'on vérifie de plus si la condition qu'une augmentation de l'effet de freinage sur la ou les roues doit être empêchée est remplie et **en ce qu'**au cas où cette condition est satisfaite, l'effet de freinage est maintenu au lieu d'être augmenté.

9. Procédé selon la revendication 1, **caractérisé en ce que** la détermination de la valeur de consigne et/ou de la grandeur d'écart est réalisée si une condition appropriée d'admission est satisfaite, et/ou **en ce que** la commande des actionneurs de la ou des roues est libérée si une condition appropriée de libération est satisfaite et/ou **en ce que** la commande des actionneurs de la ou des roues est interrompue si une condition appropriée d'interruption est satisfaite.

10. Procédé selon la revendication 1, **caractérisé en ce que** l'installation de freinage à régulation du patinage est une installation de freinage dans laquelle au moins le patinage au freinage des différentes roues du véhicule est régulé et/ou **en ce que** le véhicule se trouve dans une plage de freinage partiel pendant la stabilisation.

11. Dispositif de stabilisation d'un véhicule équipé d'une installation de freinage à régulation du patinage, qui contient
des moyens (202) par lesquels les vitesses (vrad) des différentes roues du véhicule sont déterminées,
des moyens (205) par lesquels une valeur de consigne (vsollinVR) de la vitesse de roue est déterminée pour au moins une roue et par lesquels une grandeur d'écart (AbinVR) qui décrit l'écart entre la vitesse déterminée pour l'au moins une roue et la valeur de consigne est déterminée pour cette roue,
les actionneurs associés à la ou les roues étant commandés en fonction de la grandeur d'écart en vue de stabiliser le véhicule,
**caractérisé en ce que**
la ou les roues sont des roues situées à l'intérieur d'une courbe et en particulier la roue avant située à l'intérieur de la courbe, et
la commande des actionneurs réduit l'effet de freinage exercé sur la roue située à l'intérieur de la courbe par rapport à l'effet de freinage appliqué sur la roue du même essieu située à l'extérieur de la courbe
la valeur de consigne de la vitesse de roue étant déterminée en fonction de la vitesse de la roue située à l'extérieur de la courbe et sur le même essieu que la roue située à l'intérieur de la courbe.
